# EUROPEAN PATENT APPLICATION

(11) **EP 4 345 998 A1**
(43) Date of publication of application: **03.04.2024**
(21) Application number: 23789472.0
(22) Date of filing: 28.03.2023
(51) Int. Cl.: H01M 50/249, B60L 53/80

(54) **BATTERY SYSTEM UNIT, BATTERY SYSTEM, ELECTRICAL WORKING MACHINE, AND BATTERY SWAPPING STATION**

(30) Priority: 30.07.2022 CN 202210912589
(71) Applicant: Sany Lithium Energy Co., Ltd., Changsha, Hunan 410100 (CN)
(72) Inventor: YI, Xiaogang, Beijing 102206 (CN); ZHANG, Xing, Beijing 102206 (CN); LIU, Gang, Beijing 102206 (CN); YANG, Zhong, Beijing 102206 (CN)
(74) Representative: Osterhoff, Utz
(86) International application number: PCT/CN2023/084464
(87) International publication number: WO 2024/027177

(57) **Abstract**

Embodiments of the present application relate to the technical field of power batteries, and in particular to a battery system unit, a battery system, an electric working machine and a battery replacement station. The battery system unit includes at least one battery box; an electro-hydraulic quick-plug connector is provided on a top of the battery system unit, and the electro-hydraulic quick-plug connector is connected to a circuit and a cooling pipeline in the battery box and is configured for connecting to other battery system units. Embodiments of the present application provide the battery system unit, the electric working machine and the battery replacement station. The battery system unit includes at least one battery box, which can meet the low-power usage requirements of short mileage. Moreover, the top of the battery system unit is provided with the electro-hydraulic quick-plug connector, which can be connected to other battery system units, thus the battery system units can superimpose and increase the electric quantity. When the working mileage is long, the number of battery system units can be easily increased according to power requirements.

## Description

### TECHNICAL FIELD

Embodiments of the present application relate to the technical field of power batteries, and in particular to a battery system unit, a battery system, an electric working machine and a battery replacement station.

### BACKGROUND

At present, the electric working machine (such as the heavy truck, the mixer truck, the dump truck) mainly uses large-power battery (greater than 250kWh) assemblies.

### SUMMARY

Embodiments of the present application provide a battery system unit, a battery system, an electric working machine, and a battery replacement station, aiming to solve the problem that the low-power battery replacement assembly cannot meet the power supply requirements when the working mileage is long.

Embodiments of the present application provide a battery system unit, including: at least one battery box; an electro-hydraulic quick-plug connector is provided on a top of the battery system unit, and the electro-hydraulic quick-plug connector is connected to a circuit and a cooling pipeline in the battery box and is configured for connecting to other battery system units.

According to the battery system unit provided by the embodiments of the present application, there are two or more battery boxes stacked in the battery system unit, and the circuit and the cooling pipe between each of the battery boxes are respectively communicated.

According to the battery system unit provided by the embodiments of the present application, a locking device is provided on an upper side of the battery box located on a top of the battery system unit, and the battery system unit is detachably connected to other battery system units through the locking device.

According to the battery system unit provided by the embodiments of the present application, the locking device is a locking cylinder, a locking groove is provided on a lower side of the battery box located on a bottom of the battery system unit, and the locking groove is detachably connected with the locking cylinder of an adjacent battery system unit or the locking cylinder on an installation structure corresponding to the battery system unit.

According to the battery system unit provided by the embodiments of the present application, the locking cylinder and the locking groove are provided with a corresponding tip structure.

According to the battery system unit provided by the embodiments of the present application, the battery system unit further includes an upper cover configured to selectively cover on the electro-hydraulic quick-plug connector.

According to the battery system unit provided by the embodiments of the present application, each of the battery boxes is provided with a water pipe and a heat exchange plate, the water pipes in each of the battery boxes are communicated with each other, and the water pipe and the heat exchange plate provided in a same battery box are communicated; the water pipe in the battery box located at the top of the battery system unit is communicated with a liquid connector in the electro-hydraulic quick-plug connector; and the water pipe in the battery box located at the bottom of the battery system unit is connected to a bottom connector on a lower side of the battery box located at the bottom of the battery system unit.

According to the battery system unit provided by the embodiments of the present application, the water pipes in different battery boxes are communicated through a liquid channel on the battery box.

Embodiments of the present application also provide a battery system, including an upper battery system and at least one battery system unit; the upper battery system is stacked with the at least one of the battery system units, and a bottom of the upper battery system is connected and matched with the electro-hydraulic quick-plug connector provided on a top of the battery system unit; and the upper battery system includes at least one battery box, and a top cover is provided on a top of the upper battery system.

According to the battery system provided by the embodiments of the present application, a locking device is provided on a top of the battery system unit, and the upper battery system is detachably connected to the battery system unit through the locking device.

According to the battery system provided by the embodiments of the present application, the locking device is a locking cylinder, a locking groove is provided on a lower side of the upper battery system, and the locking groove is detachably connected to the locking cylinder of the adjacent battery system.

According to the battery system provided by the embodiments of the present application, there are more than two battery system units, and the adjacent battery system units are detachably connected through the locking device.

According to the battery system provided by the embodiments of the present application, the battery system unit and the battery box of the at least one of the upper battery systems are connected as follows:
each of the battery boxes is provided with a corresponding through hole extending in a stacking direction, and each of the battery boxes is detachably connected through fasteners that are simultaneously penetrated through the through holes on each of the battery boxes.

According to the battery system provided by the embodiments of the present application, the battery system unit is provided with a high-voltage box and a maintenance switch installation box provided on any one of the battery boxes of the battery system unit.

According to the battery system provided by the embodiments of the present application, the upper battery system is provided with a high-voltage box and a maintenance switch installation box provided on any one of the battery boxes of the upper battery system.

According to the battery system provided by the embodiments of the present application, at least one of the battery system unit and the upper battery system is provided with a hoisting port and a guiding hole.

Embodiments of the present application also provide an electric working machine, including: a main machine; a base supporting the battery replacement; and the battery system unit, the base supporting the battery replacement is detachably connected to the battery system unit; or the battery system, and the base supporting the battery replacement is detachably connected to the battery system unit or the upper battery system.

According to the electric working machine provided by the embodiments of the present application, an electro-hydraulic quick-plug connector is provided on an upper side of the base supporting the battery replacement.

According to the electric working machine provided by the embodiments of the present application, a locking device is provided on the upper side of the base supporting the battery replacement, and the battery system unit is detachably connected to the base supporting the battery replacement through the locking device.

Embodiments of the present application also provide a battery replacement station, including: a battery hoist; the battery system unit, an upper side of the battery system unit is provided with a hoisting port and a guiding hole matching with the battery hoist; or the battery system, at least one of the battery system unit and the upper battery system is provided with the hoisting port and the guiding hole matching with the battery hoist; or an upper battery system, a top of the upper battery system is provided with a top cover, and the hoisting port and the guiding hole matching with the battery hoist.

The battery system unit provided by the present application includes at least one battery box, which can meet the low-power usage requirements of short mileage. Moreover, the top of the battery system unit is provided with the electro-hydraulic quick-plug connector, which can be connected to other battery system units, thus the battery system units can superimpose and increase the electric quantity. When the working mileage is long, the number of battery system units can be easily increased according to power requirements.

Furthermore, since the battery system, the electric working machine, and the battery replacement station provided by the present application are equipped with the battery system unit, they also have the above-mentioned advantages.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a schematic view of an overall structure of a battery system unit according to an embodiment of the present application.
FIG. 2 is a schematic view of an overall structure of a battery box at a top of the battery system unit according to an embodiment of the present application.
FIG. 3 is a schematic view of an internal structure of the battery box at the top of the battery system unit according to an embodiment of the present application.
FIG. 4 is an exploded view of the battery box at the top of the battery system unit according to an embodiment of the present application.
FIG. 5 is a schematic view of an overall structure of a battery box at a middle of the battery system unit according to an embodiment of the present application.
FIG. 6 is an exploded view of the battery box at the middle of the battery system unit according to an embodiment of the present application.
FIG. 7 is a schematic view of an overall structure of a battery box at a bottom of the battery system unit according to an embodiment of the present application.
FIG. 8 is an exploded view of the battery box at the bottom of a battery system unit according to an embodiment of the present application.
FIG. 9 is a schematic structural view of an internal pipeline layout of the battery system unit according to an embodiment of the present application.
FIG. 10 is a schematic view of an overall structure of the battery system according to an embodiment of the present application.
FIG. 11 is a schematic view of an overall structure of an upper battery system in the battery system according to an embodiment of the present application.
FIG. 12 is a schematic view of an overall structure of a base supporting the battery replacement in the battery system according to an embodiment of the present application.

Reference signs: 100, battery system unit; 110, battery box; 1101, liquid channel; 1102, sealing ring; 1103, liquid supply main pipe; 1104, liquid return main pipe; 1105, connection pipe; 1106, water-electricity connection chamber; 1107, battery pack; 1108, heat exchange plate; 1109, cover plate; 1110, shock-absorbing pad; 1111, copper bar; 1112, through hole; 120, electro-hydraulic quick-plug connector; 121, male end of the liquid inlet connector; 122, male end of the liquid return connector; 123, male end of the circuit connector; 124, elastic member; 130, locking cylinder; 140, locking groove; 150, upper cover; 160, bottom connector; 161, female end of the liquid inlet connector; 162, female end of the liquid return connector; 163, female end of the circuit connector; 170, high-voltage box; 180, maintenance switch installation box; 200, upper battery system; 210, top cover; 220, hoisting port; 230, guiding hole; 300, base supporting the battery replacement; and 310, rubber block.

### DETAILED DESCRIPTION OF THE EMBODIMENTS

The embodiments of the present application will be further described in detail below with the accompanying drawings and examples. The following examples are used to illustrate the present application but cannot be used to limit the scope of the present application.

In the description of the embodiments of the present application, it should be noted that the orientations or positional relationships indicated by the terms "center", "longitudinal", "lateral", "upper", "lower", "front", "back", "left", "right", "vertical", "horizontal", "top", "bottom", "inside", "outside", etc. are based on the orientations or positional relationships shown in the accompanying drawings and are only for the convenience to describe the embodiments of the present application and to simplify the description, but does not indicate or imply that the device or element referred to must have a specific orientation, be constructed and operated in a specific orientation, and therefore cannot be understood as a limitation on the embodiments of the present application. In addition, the terms "first", "second" and "third" are used for descriptive purposes only and are not to be understood as indicating or implying relative importance.

In the description of the embodiments of the present application, it should be noted that, unless otherwise explicitly stipulated and limited, the terms "connection" and "connected" should be understood in a broad sense. For example, it can be a fixed connection or a removable connection, a detachable connection or an integrated connection, a mechanical connection or an electrical connection, and a direct connection or an indirect connection through an intermediate medium. For those skilled in the art, the specific meanings of the above terms in the embodiments of the present application can be understood in specific situations.

In the embodiments of the present application, unless otherwise clearly stated and limited, the first feature "on" or "below" the second feature may be that the first feature is directly connected to the second feature, or the first feature is indirectly connected to the second feature through an intermediate medium. Furthermore, the first feature "above" or "beneath" the second feature may be that the first feature is directly above or diagonally above the second feature or the first feature is directly beneath or diagonally beneath the second feature, or simply means that the first feature is higher in level than the second feature or the first feature is lower in level than the second feature.

In the description of this specification, reference to the description of the terms "one embodiment", "some embodiments", "examples", "specific examples" or "some examples" is intended to describe that the specific features, structures, materials or characteristics of the embodiments or the examples are included in at least one embodiment or example of the embodiments of the present application. In this description, the schematic expressions of the above terms are not necessarily directed to the same embodiment or example. Furthermore, the specific features, structures, materials or characteristics described may be combined in any suitable manner in any one or more embodiments or examples. In addition, those skilled in the art can combine different embodiments or examples and features of different embodiments or examples described in this specification unless they are inconsistent with each other.

Based on statistical results, the working radius of electric working machines is usually between 20km and 30km, and the working radius of 30km can meet more than 90% of usage requirements. Under normal circumstances, the working radius of engineering transport vehicles is 20km. It can be seen that the low-power battery replacement assembly can meet the requirements of most electric working machines. Moreover, as for the cost, the low-power battery replacement assemblies can reduce initial investment; as for the fleet, the low-power battery replacement assemblies can reduce the payback cycle. However, the low-power battery replacement assembly cannot meet the power supply requirements when the working mileage is long.

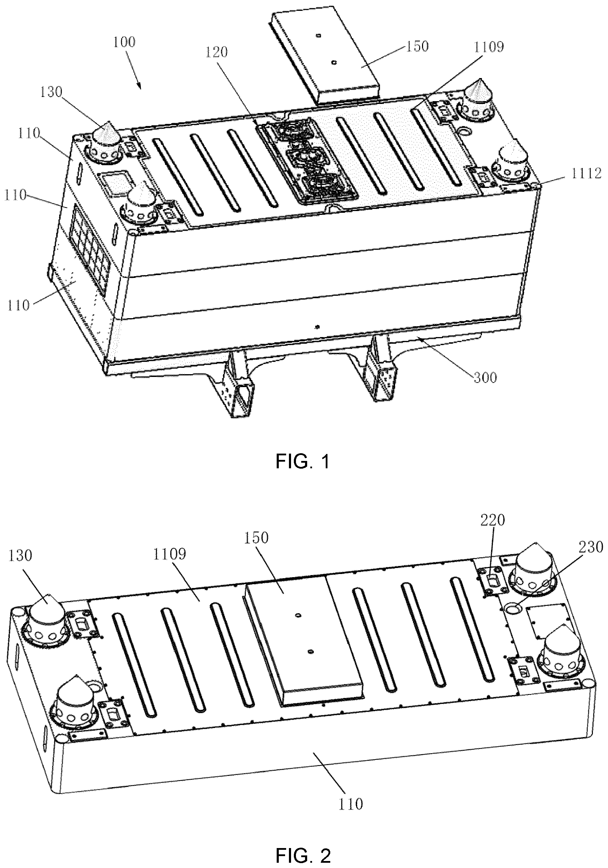

The battery system unit 100 of the present application is described below with reference to FIG. 1 to FIG. 9. As shown in FIG. 1 to FIG. 9, the battery system unit 100 of the present application includes at least one battery box 110. An electro-hydraulic quick-plug connector 120 is provided on a top of the battery box 110. The electro-hydraulic quick-plug connector 120 is connected to a circuit in the battery box 110 and a cooling pipeline, and is configured for connecting to other battery system units 100.

In an embodiment, two or more battery boxes 110 are stacked together to meet the low-power usage requirements of short mileage and can be used in most electric working machines. When a working mileage of the electric working machine is long and a required electric quantity is large, more than two battery system units 100 can be stacked. At this time, the electro-hydraulic quick-plug connector of the lower battery system unit 100 can be connected to the upper battery system unit 100, which is convenient to use and can be selectively installed according to usage requirements.

In an embodiment, two or more battery boxes 110 are provided in the battery system unit 100, and the two or more battery boxes 110 are stacked. For example, as shown in FIG. 1, three battery boxes 110 are stacked in sequence in a vertical direction. The number of battery boxes 110 is not limited in the present application. The circuits and cooling pipes between each of the battery boxes110 are respectively connected.

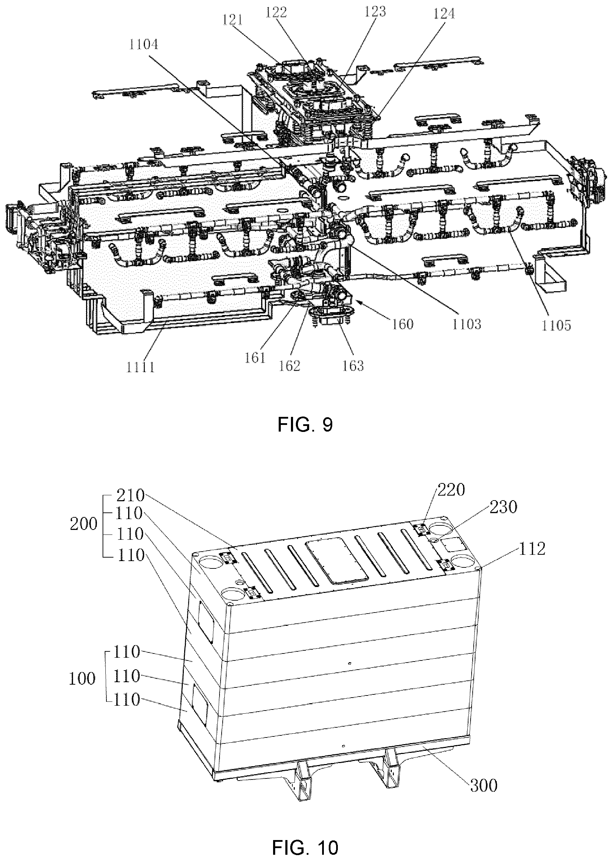

Referring to FIG. 9, in an embodiment, the electro-hydraulic quick-plug connector 120 is supported by an elastic member 124 and provided on the battery box 110. The elastic member 124 can be a support spring, and can provide a certain margin of movement for the electro-hydraulic quick-plug connector 120 to avoid a damage resulting from a rigid connection of the electro-hydraulic quick-plug connector 120.

Please referring to FIG. 1 to FIG. 9, in an embodiment, a locking device is provided on an upper side of the battery box located at the top of the battery system unit 110, and the battery system unit 100 is detachably connected to other battery system units 100 through the locking device. When two or more battery system units 100 are stacked according to usage requirements, the lower battery system unit 100 can be connected to the upper battery system unit 100 through the locking device to ensure a stability of the connection between the battery system units 100, which avoids the damage to the electro-hydraulic connection of the battery system unit 100 when bumps, shaking, etc. occur, and is conducive to ensuring a safe use and increasing a service life.

In an embodiment, two or more locking devices are provided on the upper side of the battery box located at the top of the battery system unit 110. For example, four locking devices are provided and are at four corners of the upper side of the battery box located at the top of the battery system unit 110, so as to further increase the stability of the connection between the battery system units 100 and facilitate positioning. For example, as shown in FIG. 1, when the locking device is a locking cylinder 130, four locking cylinders 130 are provided and are at the four corners on the upper side of the battery box located at the top of the battery system unit 110.

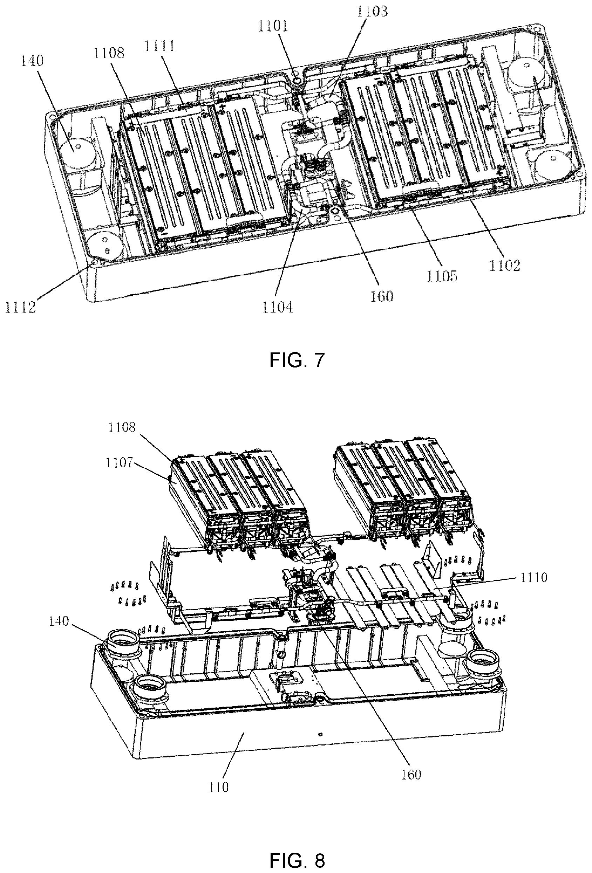

In an embodiment, when the locking device is the locking cylinder 130, a locking groove 140 is provided at a lower side of the battery box located at the bottom of the battery system unit 110 (referring to FIG. 7 and FIG. 8), and the locking groove 140 is detachably connected to the locking cylinder 130 of adjacent battery system units 100 or the locking cylinder 130 on an installation structure corresponding to the battery system units 100. The locking cylinder 130 includes a positioning column with steel balls for locking the locking groove 140. The locking cylinder 130 may use an oil cylinder, a pneumatic cylinder or an electric cylinder as a driving member.

It should be noted that, in an embodiment, the locking device can also use a motor-driven bolt structure to replace the locking cylinder 130. At this time, the locking groove 140 can use a threaded hole structure. Of course, other forms of locking devices should also be within the scope of the present application.

It should be noted here that the installation structure corresponding to the battery system units 100 is the installation structure of the battery system unit 100 during use or charging. For example, when the battery system unit 100 is in use, the installation structure corresponding to the battery system unit 100 can be a base supporting the battery replacement 300 on the working machine. When the battery system unit 100 is charging, the installation structure corresponding to the battery system units 100 can be a charging seat of the battery replacement station.

In an embodiment, the locking cylinder 130 and the locking groove 140 are provided with corresponding tip structures. The tip structure on the locking cylinder 130 makes it more convenient to insert into the locking groove 140 and plays a guiding role. The tip structure on the locking groove 140 can provide an accommodating space for a tip of the locking cylinder 130.

In an embodiment, the battery system unit 100 further includes an upper cover 150 to selectively cover the electro-hydraulic quick-connect connector 120, and an opening is provided at a lower side of the upper cover 150. When the upper cover 150 is closed on the electro-hydraulic quick-plug connector 120, the electro-hydraulic quick-plug connector 120 can be shielded and protected from dust. It should be noted here that the upper cover 150 can be selectively installed according to actual usage requirements. In an embodiment, when only one battery system unit 100 is used, the electro-hydraulic quick-plug connector 120 of the battery system unit 100 is not connected to other components and is exposed to the outside. At this time, the upper cover 150 can be installed for protection. In an embodiment, when two or more battery system units 100 are stacked and the battery system unit 100 at the top is not connected to other components, the electro-hydraulic quick-plug connector 120 of the battery system unit 100 at the top is exposed to the outside, and the upper cover 150 can be installed on the electro-hydraulic quick-plug connector 120 of the battery system unit 100 at the top for protection.

In an embodiment, the upper cover 150 is detachably connected to the battery box 110 through clamping, bolting, etc., to facilitate the disassembly and assembly of the upper cover 150.

It can be understood that when the electro-hydraulic quick-plug connector 120 is not connected to other components and is exposed to the outside, a circulation liquid interface on the electro-hydraulic quick-plug connector 120 can be blocked by a blocking member or the upper cover 150 to prevent a leakage of the circulation liquid.

In an embodiment, each of the battery boxes 110 is provided with a water pipe and a heat exchange plate 1108. The water pipes in the boxes are communicated with each other to realize a mutual circulation of circulation liquids between different battery boxes 110 in a same battery system unit 100. The water pipes are communicated with the heat exchange plate 1108 in the same battery box 110, so that the circulation liquid can exchange heat through the heat exchange plate 1108.

The water pipe in the battery box located at the top of the battery system unit 110 is connected to a liquid joint in the electro-hydraulic quick-plug connector 120. The water pipe in the battery box located at the bottom of the battery system unit 110 is connected to a bottom connector 160. The bottom connector 160 is provided at the lower side of the battery box 110, and can communicate with the electro-hydraulic quick-plug connector 120. It should be noted that the bottom connector 160 on the battery system unit 100 is not limited to communicating with the adjacent electro-hydraulic quick-plug connector 120, but can also communicate with the electro-hydraulic quick-plug connector provided on the installation structure of the battery system unit 100. For example, the connector 120 is connected with the base supporting the battery replacement 300 on the working machine or the electro-hydraulic quick-plug connector 120 provided on the charging seat of the battery replacement station.

When more than two battery system units 100 are stacked, the circulation liquid in the lower battery system unit 100 can flow into the upper battery system unit 100 through the connection between the electro-hydraulic quick-plug connector 120 and the bottom connector 160, and the circulation liquid in the upper battery system unit 100 can flow back to the lower battery system unit 100 through the connection between the electro-hydraulic quick-plug connector 120 and the bottom connector 160. The flow method of the circulation liquid in the installation structure within the battery system unit 100 is the same as the flow method between the two or more battery system units 100, and will not be described here again.

In an embodiment, as shown in FIG. 9, the electro-hydraulic quick-plug connector 120 is provided with a male end of the liquid inlet connector 121 and a male end of the liquid return connector 122. The male end of the liquid inlet connector 121 and the male end of the liquid return connector 122 constitute a liquid connector in the electro-hydraulic quick-plug connector 120. The bottom connector 160 is respectively provided with a female end of the liquid inlet connector 161 and a female end of the liquid return connector 162. When the electro-hydraulic quick-plug connector 120 is mated with the bottom connector 160, the male end of the liquid inlet connector 121 is mated with the female end of the liquid inlet connector 161, and the male end of the liquid return connector 122 is mated with the female end of the liquid return connector 162.

In an embodiment, the electro-hydraulic quick-plug connector 120 is also provided with a male end of the circuit connector 123, and the bottom connector 160 is provided with a female end of the circuit connector 163. When the electro-hydraulic quick-plug connector 120 is plugged and matched with the bottom connector 160, the male end of the circuit connector 123 and the female end of the circuit connector 163 are matched and connected.

In an embodiment, water pipes in different battery boxes 110 are communicated through liquid channels 1101 provided on the battery boxes 110.

Taking the battery system unit 100 with three battery boxes 110 as an example, an opening is formed at an upper end of the liquid channel 1101 on the battery box located at the bottom of the battery system unit 110, and an opening is provided at a lower end of the liquid channel 1101 at the top. An opening is respectively formed at an upper end and a lower end of the liquid channel 1101 on the battery box located at a middle of the battery system unit 110, and the openings are aligned with the openings of the liquid channel 1101 of the battery box located at the bottom of the battery system unit 110 and the battery box located at the top of the battery system unit 110 respectively. Each of the liquid channels 1101 is connected to a corresponding water pipe. In this way, the circulation liquid in the battery box 110 provided below can flow into the liquid channel 1101 of the adjacent upper battery box 110 through the liquid channel 1101, and flow into the heat exchange plate 1108 through the water pipe. The circulation liquid in the battery box 110 provided above can also flow into the liquid channel 1101 from the heat exchange plate 1108 through the water pipe, and further flow back to the water pipe of the battery box 110 provided below.

It can be understood that each of the battery boxes 110 is provided with two liquid channels 1101, one liquid channel 1101 of which is as a liquid supply channel, and the other liquid channel 1101 of which is as a liquid return channel.

In an embodiment, the two liquid channels 1101 on the battery box 110 are provided at middle of two opposite side plates.

In an embodiment, a sealing ring 1102 is provided between adjacent battery boxes 110. The sealing ring 1102 can ensure a sealing of a connection position of the liquid channel 1101 and can also ensure a sealing of a seam between the battery boxes 110.

In an embodiment, the water pipes include a liquid supply main pipe 1103, a liquid return main pipe 1104 and a connection pipe 1105 that are distributed in each of the battery boxes 110.

In the battery box located at the bottom of the battery system unit 110: the liquid supply main pipe 1103 is connected to the female end of the liquid inlet connector 161 on the bottom connector 160, the liquid supply channel in the battery box located at the bottom of the battery system unit 110, and the liquid inlet of the adjacent heat exchange plate 1108. The liquid return main pipe 1104 is connected to the liquid return channel in the battery box located at the bottom of the battery system unit 110, the liquid outlet of the farthest heat exchange plate 1108, and the female end of the liquid return connector 162 on the bottom connector 160.

In the battery box located at the middle of the battery system unit 110: the liquid supply main pipe 1103 is connected to the liquid supply channel in the battery box 110 where it is provided and the liquid inlet of the adjacent heat exchange plate 1108 in the battery box 110 where it is provided. One end of the liquid return main pipe 1104 is connected to the liquid outlet of the farthest heat exchange plate 1108, and the other end of the liquid return main pipe 1104 is connected to the liquid return channel in the battery box 110 where it is provided.

In the battery box located at the top of the battery system unit 110: one end of the liquid supply main pipe 1103 is connected to the liquid supply channel in the battery box located at the top of the battery system unit 110, and the other end of the liquid supply main pipe 1103 is connected to the male end of the liquid inlet connector 121 on the electro-hydraulic quick-plug connector 120, and is connected to the liquid inlet of the adjacent heat exchange plate 1108. One end of the liquid return main pipe 1104 is connected with the liquid return channel in the battery box located at the top of the battery system unit 110, and the other end of the liquid return main pipe 1104 is connected with the liquid outlet of the farthest heat exchange plate 1108.

In each of the battery boxes 110, the adjacent heat exchange plates 1108 are connected in series through connection pipes 1105.

It should be noted that the connection method is not limited to direct connection. In an embodiment, the liquid supply main pipe 1103 is simultaneously connected with the female end of the liquid inlet connector 161 on the bottom connector 160, the liquid inlet of the heat exchange plate 1108, and the liquid supply channel in the battery box 110. The connection method can be branch pipes on the liquid supply main pipe 1103, which connects the two ends of the liquid supply main pipe 1103 and one end of the branch pipe away from the liquid supply main pipe 1103 with the female end of the liquid inlet connector 161, the liquid inlet of the heat exchange plate 1108, and the liquid supply channel in the battery box 110.

In an embodiment, the liquid supply main pipe 1103 and the liquid return main pipe 1104 are provided in the middle of the length direction of their corresponding battery boxes 110, and the battery packs 1107 and their corresponding heat exchange plates 1108 in the battery box 110 are respectively provided on both sides of the liquid supply main pipe 1103 and the liquid return main pipe 1104. In this way, the heat exchange plates 1108 on both sides respectively form a heat exchange cycle, which helps to improve the heat exchange efficiency.

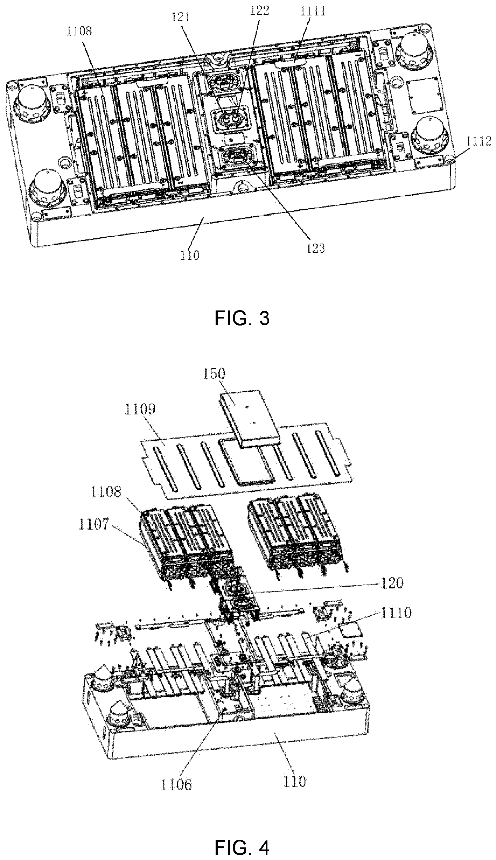

Further, as shown in FIG. 4, the battery box located at the top of the battery system unit 110 is provided with a water-electricity connection chamber 1106. The water-electricity connection chamber 1106 is surrounded by a plurality of side plates fixedly connected to the bottom plate of the battery box 110. The electro-hydraulic quick-plug connector 120, the liquid supply main pipe 1103 and the liquid return main pipe 1104 are provided in the water-electricity connection chamber 1106.

In an embodiment, a shock-absorbing pad 1110 is provided between the bottom plate of each of the battery boxes 110 and the battery pack 1107. The shock-absorbing pad 1110 may be a shock-absorbing cotton or other elastic materials, such as rubber, which is not limited in this embodiment.

In an embodiment, a cover plate 1109 is provided on the upper side of the battery box located at the top of the battery system unit 110, and the cover plate 1109 is detachably connected to the battery box located at the top of the battery system unit 110, for example, by bolting, snapping, etc. The cover plate 1109 can shield and protect the upper opening of the battery box 110.

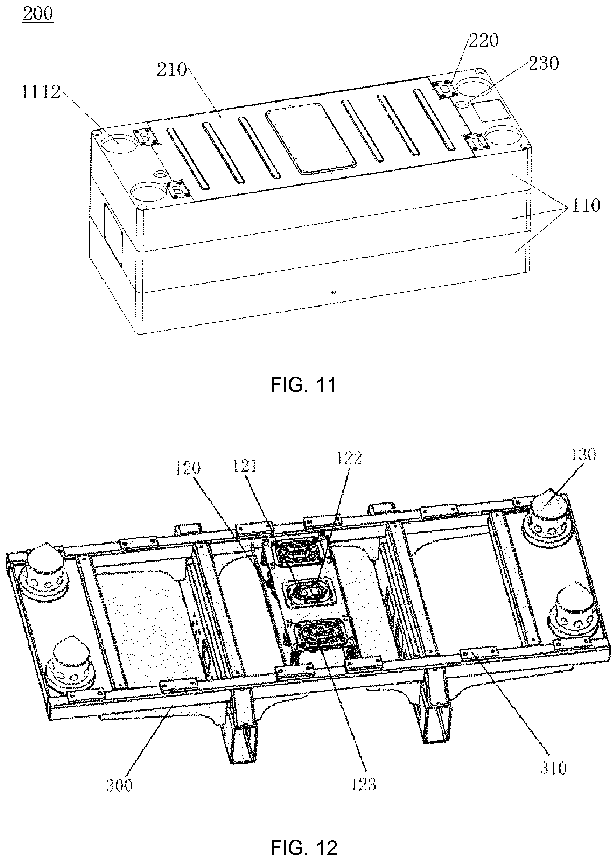

The battery system according to an embodiment of the present application will be described below with reference to FIG. 10 to FIG. 12. As shown in FIG. 10 to FIG. 12, the battery system includes an upper battery system 200 and at least one battery system unit 100 as described above. The upper battery system 200 is stacked with the battery system unit 100, and a bottom of the upper battery system 200 is connected and matched with the electro-hydraulic quick-plug connector provided on the top of the battery system unit 100. The upper battery system 200 includes at least one battery box 110, and a top cover 210 is provided on the top of the upper battery system 200. When two or more battery boxes 110 are provided in the upper battery system, the battery boxes 110 in the upper battery system are stacked, and the battery box located at the top of the battery system unit 110 of the upper battery system 200 is provided with the top cover 210.

In order to realize the electro-hydraulic connection between the upper battery system 200 and the battery system unit 100, a bottom connector 160 is provided at the battery box located at the bottom of the battery system unit 110 of the upper battery system 200, and the bottom connector 160 is connected with the electro-hydraulic quick-plug connector 120 of the adjacent battery system unit 100.

Further, the upper battery system 200 is detachably connected to the battery system unit 100 through a locking device.

Furthermore, the locking device is a locking cylinder 130, and a locking groove 140 is provided on a lower side of the upper battery system 200. The locking groove 140 is configured for detachable connection with the locking cylinder 130 of the adjacent battery system unit 100.

In an embodiment, more than two battery system units 100 are provided, and adjacent battery system units 100 are detachably connected through the locking device.

It can be understood that one upper battery system 200 can replace the power supply of one battery system unit 100. When two battery system units 100 meet the usage requirements, it can be realized by the upper battery system 200 and one battery system unit 100; when three battery system units 100 meet the usage requirements, it can be realized by the upper battery system 200 and two battery system units 100, and so on. It should be emphasized that the upper battery system 200 is always provided at the top of the battery system.

According to the battery system of the present application, the battery boxes 110 of at least one of the battery system unit 100 and the upper battery system 200 are connected in the following manner: each of the battery boxes 110 is provided with a corresponding through hole 1112 extending in a stacking direction, and the battery boxes 110 are detachably connected through fasteners that are simultaneously penetrated through the through holes 1112 on each of the battery boxes 110.

In an embodiment, the fasteners may be bolts, and the threaded ends of the fasteners pass through the corresponding through holes 1112 on all the battery boxes 110 in the battery system unit 100 or the upper battery system 200 and then connected to the nuts, so that each of the battery boxes can be combined together to form a stable connection between the battery boxes 110 in the battery system unit 100 or the upper battery system 200.

Furthermore, more than two fasteners are provided on the battery system unit 100 or the upper battery system 200. For example, the fastener is respectively provided at each of the four corners of the battery system unit 100 or the upper battery system 200.

In an embodiment, in each of the battery boxes 110 of the battery system unit 100 and in each of the battery boxes 110 of the upper battery system 200, the battery box located at the top of the battery system unit 110 and the battery box located at the bottom of the battery system unit 110 are respectively provided with sinking grooves, which helps to hide the head of the fastener and the nuts connected thereto.

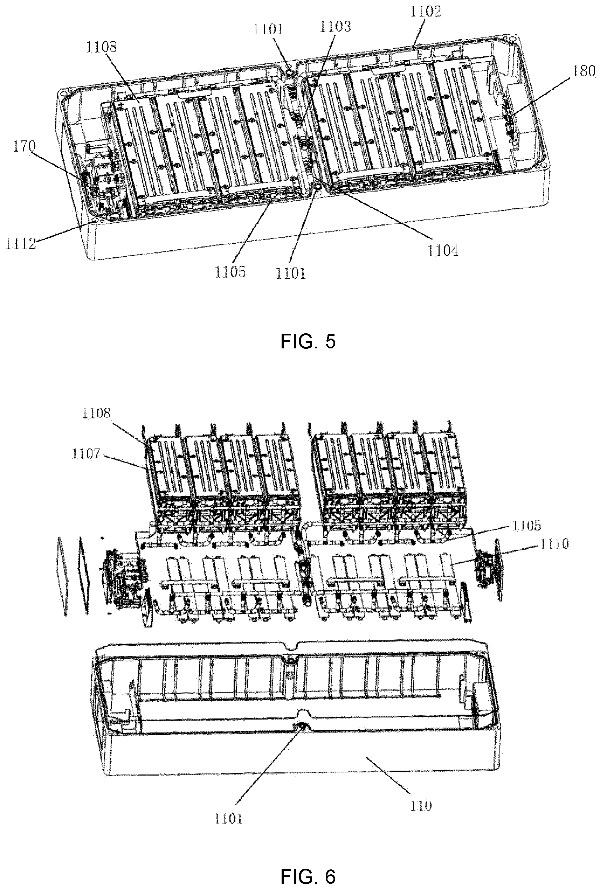

In an embodiment, as shown in FIG. 5, the battery system unit 100 is provided with a high-voltage box 170 and a maintenance switch installation box 180. The high-voltage box 170 and the maintenance switch installation box 180 are provided on any battery box 110 of the battery system unit 100.

In an embodiment, the upper battery system 200 is provided with the high-voltage box 170 and the maintenance switch installation box 180. The high-voltage box 170 and the maintenance switch installation box 180 are provided on any one of the battery boxes 110 of the upper battery system 200.

In an embodiment, the maintenance switch provided in the maintenance switch installation box 180 can be a manual service disconnect (MSD), so that the operator can quickly control the connection and disconnection of the battery circuit at the maintenance site. The maintenance switch can be connected to the maintenance switch installation box 180 through fasteners such as bolts, which is not limited in this embodiment.

It should be noted that the electrical devices in the high-voltage box 170 and the maintenance switch installation box 180 in the battery system unit 100 are simultaneously connected to the electrical device circuits in each of the battery boxes 110 of the battery system unit 100. The high-voltage box 170 in the upper battery system 200, the electrical devices in the maintenance switch installation box 180 are simultaneously connected to the electrical device circuits in each of the battery boxes 110 of the upper battery system 200. As shown in FIG. 3, the circuits may be copper bars 1111 or cables, etc., which is not limited in this embodiment.

It should be further noted that, in order to realize the circuit connection between the battery boxes 110, a box penetration opening can be provided at the bottom of the battery box 110 that needs to pass through the circuit. Furthermore, in order to fix the circuits in the battery box 110, fixing ribs may be provided on the battery box 110.

In an embodiment, the high-voltage box 170 and the maintenance switch installation box 180 are provided on the battery box located at the middle of the battery system unit 110, and are provided at both ends of the battery box 110, so that the configuration of the battery system unit 100 and the upper battery system 200 is more reasonable.

According to the battery system of the present application, at least one of the battery system unit 100 and the upper battery system 200 is provided with a hoisting port 220 and a guiding hole 230. In an embodiment, both the top of the battery system unit 100 and the upper battery system 200 are provided with the hoisting ports 220 and the guiding holes 230 to facilitate the hoisting operation of the battery system unit 100 and the upper battery system 200.

Finally, it should be noted that the difference between the upper battery system 200 and the battery system unit 100 is that in the upper battery system 200, the battery box located at the top of the battery system unit 110 is not provided with the electro-hydraulic quick-plug connector 120 but is provided with the top cover 210. To avoid repetition, the internal structure of the battery system 200 will not be described in detail here.

The present application also provides an electric working machine. As shown in FIG. 10 to FIG. 12, the electric working machine includes a main machine and a base supporting the battery replacement 300. The electric working machine also includes the battery system unit 100 or the battery system, and the base supporting the battery replacement 300 is detachably connected to the battery system unit 100 or the upper battery system 200. It should be noted here that when the electric working machine includes the battery system, it can be connected to the battery system unit 100 at the bottom of the battery system through the base supporting the battery replacement 300, or the upper battery system in the battery system can be removed and the base supporting the battery replacement 300 is connected to the upper battery system. In this embodiment, the main machine is used to operate and support the base supporting the battery replacement 300. The base supporting the battery replacement 300 supports the battery system unit 100 or the battery system. The battery system unit 100 or the upper battery system 200 connected to the base supporting the battery replacement 300 can provide power to the main machine through the base supporting the battery replacement 300.

In an embodiment, the electric working machine may be various types of equipment, such as a crane, an excavator, a transporter, or a compactor, etc.

It should be noted that the electric working machine is not limited in this embodiment. In addition to the specific forms of the electric working machine described above, any form of the electric working machine that requires power exchange is included in the scope of the present application.

The base supporting the battery replacement 300 can be made of aluminum sheet metal parts and is tailor-welded, and has the advantages of light weight and high strength.

In an embodiment, the electro-hydraulic quick-plug connector 120 is provided on the upper side of the base supporting the battery replacement 300. When the battery system unit 100 is installed on the base supporting the battery replacement 300, the electro-hydraulic quick-plug connector 120 on the base supporting the battery replacement 300 is connected to the bottom connector 160 at the bottom of the battery system unit 100. When the upper battery system 200 is installed on the base supporting the battery replacement 300, the electro-hydraulic quick-plug connector 120 on the base supporting the battery replacement 300 is connected to the bottom connector 160 at the bottom of the upper battery system 200.

In an embodiment, a locking device is provided on the upper side of the base supporting the battery replacement 300, and the battery system unit 100 is detachably connected to the base supporting the battery replacement 300 through the locking device. Further, the locking device on the base supporting the battery replacement 300 is same as the locking device on the top of the battery system unit 100, which is the locking cylinder 130. Furthermore, the locking device on the base supporting the battery replacement 300 is adapted and connected to the locking groove 140 at the bottom of the battery system unit 100.

In an embodiment, a rubber block 310 is provided on the upper side of the base supporting the battery replacement 300. The rubber block 310 can support the battery system unit 100 and prevent damage to the contact location between the battery system unit 100 and the base supporting the battery replacement 300.

The present application also provides a battery replacement station, including a battery hoist.

In an embodiment, as shown in FIG. 10 to FIG. 12, the battery replacement station also includes the battery system unit 100, and the hoisting port 220 and the guiding hole 230 configured for the battery hoist are provided at an upper side of the battery system unit 100.

In an embodiment, as shown in FIG. 10 to FIG. 12, the battery replacement station also includes the battery system unit 100. At least one of the battery system unit 100 and the upper battery system 200 is provided with a hoisting port 220 and a guiding hole 230 configured for the battery hoist. In an embodiment, the battery system unit 100 and the upper battery system 200 are provided with the hoisting port 220 and the guiding hole 230 configured for the battery hoist.

In an embodiment, as shown in FIG. 10 to FIG. 12, the battery replacement station also includes the upper battery system 200. The top of the upper battery system 200 is provided with the top cover 210 and the hoisting port 220 and the guiding hole 230 configured for the battery hoist.

Specifically, when the battery in the electric working machine is in a state to be replaced, the battery system unit 100, the battery system or the upper battery system 200 in the battery system are removed through the battery hoist, and are hoisted to the battery replacement station, so as to charge the battery system unit 100, the battery system or the upper battery system 200 in the battery system. The battery hoist can also hoist the charged battery system unit 100, the battery system or the upper battery system 200 in the battery system to the electric working machine.

Finally, it should be noted that the embodiments are only used to illustrate the present application but cannot be used to limit the scope of the present application. Notwithstanding the detailed description of embodiments of the present application with reference to the foregoing embodiments, it should be understood by those skilled in the art that the technical solutions recorded in the foregoing embodiments may be modified or equivalent to some of the technical features thereof; such modification or substitution shall not separate the essence of the corresponding technical solution from the scope of the present application.

## Claims

1. A battery system unit, **characterized by** comprising:
at least one battery box;
wherein an electro-hydraulic quick-plug connector is provided on a top of the battery system unit, and the electro-hydraulic quick-plug connector is connected to a circuit and a cooling pipeline in the battery box and is configured for connecting to other battery system units.

2. The battery system unit according to claim 1, wherein there are two or more battery boxes stacked in the battery system unit, and the circuit and the cooling pipe between each of the battery boxes are respectively communicated.

3. The battery system unit according to claim 2, wherein a locking device is provided on an upper side of the battery box located on a top of the battery system unit, and the battery system unit is detachably connected to other battery system units through the locking device.

4. The battery system unit according to claim 3, wherein the locking device is a locking cylinder, a locking groove is provided on a lower side of the battery box located on a bottom of the battery system unit, and the locking groove is detachably connected with the locking cylinder of an adjacent battery system unit or the locking cylinder on an installation structure corresponding to the battery system unit.

5. The battery system unit according to any one of claims 1 to 4, further comprising an upper cover configured to selectively cover on the electro-hydraulic quick-plug connector.

6. The battery system unit according to any one of claims 2 to 4, wherein each of the battery boxes is provided with a water pipe and a heat exchange plate, the water pipes in each of the battery boxes are communicated with each other, and the water pipe and the heat exchange plate provided in a same battery box are communicated;
the water pipe in the battery box located at the top of the battery system unit is communicated with a liquid connector in the electro-hydraulic quick-plug connector; and
the water pipe in the battery box located at the bottom of the battery system unit is connected to a bottom connector on a lower side of the battery box located at the bottom of the battery system unit.

7. The battery system unit according to claim 6, wherein the water pipes in different battery boxes are communicated through a liquid channel on the battery box.

8. A battery system, **characterized by** comprising an upper battery system and at least one battery system unit according to any one of claims 1 to 7; wherein
the upper battery system is stacked with the at least one of the battery system units, and a bottom of the upper battery system is connected and matched with the electro-hydraulic quick-plug connector provided on a top of the battery system unit; and
the upper battery system comprises at least one battery box, and a top cover is provided on a top of the upper battery system.

9. The battery system according to claim 8, wherein a locking device is provided on a top of the battery system unit, and the upper battery system is detachably connected to the battery system unit through the locking device.

10. The battery system according to claim 9, wherein the locking device is a locking cylinder, a locking groove is provided on a lower side of the upper battery system, and the locking groove is detachably connected to the locking cylinder of the adjacent battery system.

11. The battery system according to claim 10, wherein the locking cylinder and the locking groove are provided with a corresponding tip structure.

12. The battery system according to any one of claims 9 to 11, wherein there are more than two battery system units, and the adjacent battery system units are detachably connected through the locking device.

13. The battery system according to any one of claims 8 to 12, wherein the battery system unit and the battery box of the at least one of the upper battery systems are connected as follows:
each of the battery boxes is provided with a corresponding through hole extending in a stacking direction, and each of the battery boxes is detachably connected through fasteners that are simultaneously penetrated through the through holes on each of the battery boxes.

14. The battery system according to any one of claims 8 to 13, wherein the battery system unit is provided with a high-voltage box and a maintenance switch installation box provided on any one of the battery boxes of the battery system unit.

15. The battery system according to any one of claims 8 to 14, wherein the upper battery system is provided with a high-voltage box and a maintenance switch installation box provided on any one of the battery boxes of the upper battery system.

16. The battery system according to any one of claims 8 to 15, wherein at least one of the battery system unit and the upper battery system is provided with a hoisting port and a guiding hole.

17. An electric working machine, **characterized by** comprising:
a main machine;
a base supporting the battery replacement; and
the battery system unit according to any one of claims 1 to 7, wherein the base supporting the battery replacement is detachably connected to the battery system unit; or
the battery system according to any one of claims 8 to 16, wherein the base supporting the battery replacement is detachably connected to the battery system unit or the upper battery system.

18. The electric working machine according to claim 17, wherein an electro-hydraulic quick-plug connector is provided on an upper side of the base supporting the battery replacement.

19. The electric working machine according to claim 17 or 18, wherein a locking device is provided on the upper side of the base supporting the battery replacement, and the battery system unit is detachably connected to the base supporting the battery replacement through the locking device.

20. A battery replacement station, **characterized by** comprising:
a battery hoist;
the battery system unit according to any one of claims 1 to 7, wherein an upper side of the battery system unit is provided with a hoisting port and a guiding hole matching with the battery hoist; or
the battery system according to any one of claims 8 to 16, wherein at least one of the battery system unit and the upper battery system is provided with the hoisting port and the guiding hole matching with the battery hoist; or
an upper battery system, wherein a top of the upper battery system is provided with a top cover, the hoisting port and the guiding hole matching with the battery hoist.
